# EUROPÄISCHE PATENTSCHRIFT

(11) **EP 3 146 822 B1**
(45) Veröffentlichungstag und Bekanntmachung des Hinweises auf die Patenterteilung: **20.03.2019**
(21) Anmeldenummer: 16179610.7
(22) Anmeldetag: 15.07.2016
(51) Int. Cl.: A01B 63/10, A01B 63/111, A01B 63/112, A01B 63/14, A01B 79/00

(54) **VORRICHTUNG UND VERFAHREN ZUR REGELUNG DES BETRIEBS EINES HYDRAULISCH BETÄTIGBAREN SCHLEPPGERÄTS AN EINEM FAHRZEUG**
DEVICE AND METHOD FOR CONTROLLING THE OPERATION OF A HYDRAULICALLY ACTUATED TOWING DEVICE ON A VEHICLE
DISPOSITIF ET PROCÉDÉ DE RÉGLAGE DU FONCTIONNEMENT D'UN APPAREIL DE REMORQUAGE HYDRAULIQUE D'UN VÉHICULE

(30) Priorität: 24.09.2015 DE 102015218330
(43) Veröffentlichungstag der Anmeldung: 29.03.2017
(73) Patentinhaber: ROBERT BOSCH GMBH, 70442 Stuttgart (DE)
(72) Erfinder: Schleyer, Markus, 71640 Ludwigsburg (DE); Rose, Steffen, 71638 Ludwigsburg (DE)
(74) Vertreter: Thürer, Andreas

(56) Entgegenhaltungen:
- EP-A1- 2 583 543
- EP-A1- 2 915 418
- EP-A2- 2 524 585
- WO-A1-2013/013917
- DE-A1-102005 051 407
- DE-C1- 10 219 270

## Beschreibung

Die vorliegende Erfindung betrifft eine Vorrichtung für ein Fahrzeug, insbesondere einen Traktor, mit einer hydraulischen Betätigungseinheit zur Regelung des Betriebs eines Schleppgeräts an dem Fahrzeug sowie ein hierfür geeignetes Betriebsverfahren.

Insbesondere findet die Erfindung Anwendung bei einem Traktor, einem landwirtschaftlichen Ackerschlepper, einer mobilen Arbeitsmaschine zur Feldbearbeitung oder dergleichen. Traktoren bzw. Ackerschlepper werden als universell einsatzbare Arbeitsmaschinen vorrangig in der Landwirtschaft zur Bearbeitung von Ackerböden eingesetzt. Das Pflügen als eine der häufigsten Anwendungen stellt hierbei hohe Anforderungen an den Antriebsstrang des Traktors und die Regelgüte einer elektronisch-hydraulischen Hubwerksregelung, denn nur mit einem abgestimmten Betrieb können die Pflügearbeiten schnell und effizient durchgeführt werden. Vor allem bei stark inhomogenen und sehr feuchten Böden besteht aufgrund einer sehr großen Widerstandskraft am Pflug die Möglichkeit, dass der Traktor steckenbleibt und/oder der Motor abgewürgt wird. Zusätzlich zu einer Lageregelung des Pflugs kann eine Zugkraftregelung vorgesehen sein, die ein Abwürgen des Motors dadurch zu verhindern versucht, dass die Zugkraft am traktorseitigen Gelenk des Unterlenkers gemessen und diese bzw. deren Gradient auf einen Wert geregelt wird, welcher ein Abwürgen des Motors verhindert bzw. eine Reduzierung des Schlupfs der Anpressräder bewirkt. Dies geschieht insbesondere durch ein (kurzzeitiges) Anheben des Pflugs und der daraus resultierenden Verringerung der Widerstandskraft des Pflugs.

Bei sehr feuchten Böden besteht jedoch weiterhin die Möglichkeit, dass sich der Traktor festfahren kann, ohne dass der Motor abgewürgt wird. Dies ist vor allem bei sehr großen Schlupf der Antriebsräder zu erkennen, welcher keine oder keine mehr ausreichende Zugkraft bereitstellen lässt.

Um den Schlupf auf ein akzeptables Maß zu begrenzen und ein zu starkes Durchdrehen der Antriebsräder zu verhindern, ist bekannt, das System der elektronisch-hydraulischen Hubwerksregelung mit einem Radarsensor oder einem Ultraschallsensor auszustatten, welcher die tatsächliche Geschwindigkeit des Traktors auf Basis des Doppler-Effektes misst. Da zusätzlich die Raddrehzahl der Antriebsräder bekannt ist, kann durch einen Vergleich der tatsächlichen Geschwindigkeit mit der auf Basis der Raddrehzahl bestimmten (erwarteten) Geschwindigkeit auf den (aktuellen) Schlupf der Antriebsräder geschlossen werden. Ein zusätzlich der Lage- und Zugkraftregelung überlagerter Schlupfregelkreis kann durch Anheben des Pflugs den maximal akzeptablen Schlupf sicherstellen und somit ein Festfahren des Traktors verhindern. Zusätzlich kann ein fest vorgegebener Schlupfsollwert eingeregelt werden, um ggf. eine energieeffiziente Betriebsweise zu erreichen, da hierdurch die Zugkräfte erhöht und der Motor ggf. besser ausgelastet werden können.

Aus der EP-A-2 524 585 sind ein hydraulisch betätigtes Hubwerk für eine mobile Arbeitsmaschine, wobei das Hubwerk ein Entlastungsdruckbegrenzungsventil aufweist, und ein Verfahren zur Regelung eines Entlastungsdrucks bekannt. Das Entlastungsdruckbegrenzungsventil ist in Abhängigkeit einer von einer Sensoranordnung erfassten Höhenänderung (Δh) eines Bodenprofils pro Zeit regelbar.

Auch wenn die geschilderten Ansätze für den Betrieb solcher Traktoren bzw. Ackerschlepper bereits gute Ergebnisse liefern, so sind die verfügbaren Systeme gleichwohl teilweise zu komplex und damit zu kostenintensiv, nicht ausreichend verlässlich und/oder zu ungenau. Insoweit besteht insbesondere bei der Ermittlung des Antriebschlupfs bzw. der Bestimmung der tatsächlichen Geschwindigkeit Bedarf an Verbesserungen.

Hiervon ausgehend ist es Aufgabe der vorliegenden Erfindung, eine Vorrichtung und ein Verfahren zu schaffen, die die genannten Nachteile lindert oder sogar vermeidet. Insbesondere soll auf konstruktiv einfache und für die Umgebungsbedingungen im Feld geeignete Art die Ermittlung der tatsächlichen Fahrgeschwindigkeit verbessert werden.

Diese Aufgaben werden gelöst mit einer Vorrichtung und einem Verfahren gemäß den unabhängig formulierten Patentansprüchen. Weitere Ausgestaltungen der Erfindung sind in den abhängig formulierten Patentansprüchen angegeben. Es ist darauf hinzuweisen, dass die Beschreibung, insbesondere im Zusammenhang mit den Figuren, weitere Einzelheiten und Weiterbildungen der Erfindung anführen, die mit den Merkmalen aus den Patentansprüchen kombinierbar sind.

Hierzu trägt eine Vorrichtung für ein Fahrzeug mit einer hydraulischen Betätigungseinheit zur Regelung des Betriebs eines Schleppgeräts an dem Fahrzeug bei, umfassend zumindest eine Geschwindigkeitserfassungseinheit mit zwei in Fahrtrichtung des Fahrzeuges hintereinander positionierte und hin zum Boden gerichtete Entfernungsbestimmungssensoren und eine Auswerteeinheit sowie datenleitende Verbindungen hin zu einem Fahrzeugbetriebssystem und einem der hydraulischen Betätigungseinheit zugeordnetem Hydraulikbetriebssystem.

Dabei handelt es sich bei dem Fahrzeug insbesondere um einen Traktor bzw. einen so genannten Ackerschlepper. Als Schleppgerät wird insbesondere ein Pflug oder ein ähnliches Bodenbearbeitungsgerät angesehen. Zur Bestimmung der "tatsächlichen" Geschwindigkeit ist eine Geschwindigkeitserfassungseinheit mit zumindest einem ersten Entfernungsbestimmungssensor und einem zweiten Entfernungsbestimmungssensor vorgesehen. Beide Entfernungsbestimmungssensoren können jeweils einen Sender und einen Empfänger aufweisen und auf Anfrage der Auswerteeinheit z.B. Lichtwellen oder Schallwellen hin zum Boden abgeben und die vom Boden reflektierten Schallwellen empfangen. Ein Entfernungsbestimmungssensor kann die Entfernung mit akustischen oder optischen Wellen erfolgend und insbesondere nach Art eines Ultraschallsensors oder eines Lasersensors (Lasertriangulator oder Laserinterferometer) ausgeführt sein. Die Auswerteeinheit kann daher mit den beiden Entfernungsbestimmungssensoren elektrisch und datenleitend verbunden und eingereicht sein, deren Betrieb zu regeln und deren Messsignale zu verarbeiten. Insbesondere ist die Auswerteeinheit eingerichtet, aus Messsignalen der Entfernungsbestimmungssensoren jeweils ein charakteristisches Bodenprofil (kontinuierlich) zu ermitteln anhand von charakteristischen Bezugspunkten der Bodenprofile einen zeitlichen Versatz der Messsignale zu diesen charakteristischen Bezugspunkten zu bestimmen und daraus die tatsächliche Geschwindigkeit des Fahrzeugs zu ermitteln. Die in der Auswerteeinheit bestimmte tatsächliche Geschwindigkeit kann mit vorgegebenen Parametern des Fahrzeugbetriebssystems abgeglichen oder beeinflusst werden, wobei dann auch ein Regelungssignal an das Hydraulikbetriebssystem übermittelt und damit der Betrieb der hydraulischen Betätigungseinheit des Schleppgeräts beeinflusst werden kann.

Bevorzugt ist, dass die Entfernungsbestimmungssensoren mit einem Abstand im Bereich von 10 cm bis 30 cm [Zentimeter] zueinander versetzt angeordnet sind. Der Abstand ist bevorzugt fest fixiert und liegt besonderes bevorzugt im Bereich von etwa 20 cm. Der hier vorgeschlagen Bereich ist besonders geeignet, eine hohe Signalgüte zu erreichen, einerseits mit Hinblick auf ein Abtastverhältnis und andererseits im Hinblick auf die Beständigkeit des Bodenprofils. Der Abstand der Entfernungsbestimmungssensoren und der zeitliche Versatz der Messsignale kann zur Ermittlung der tatsächlichen Geschwindigkeit herangezogen werden, so dass dieses Problem konstruktiv und anlagemäßig auf besonders einfache Weise gelöst wurde.

Weiterhin wird als vorteilhaft angesehen, dass die Entfernungsbestimmungssensoren mit einer Distanz im Bereich von 30 cm bis 100 cm [Zentimeter] hin zum Boden (bzw. einer planaren Bodenfläche durch die Radauflagepunkte) positioniert sind. Für eine besonders gute Signalgüte wird eine Distanz von mindestens 30 cm vorgeschlagen. Im Lichte einer guten Auflösung des Bodenprofils sollte die Distanz auf maximal 100 cm begrenzt sein, ggf. sogar auf maximal 60 cm.

Die Entfernungsbestimmungssensoren können an einer Unterseite des Fahrzeugs in Nachbarschaft hinter einem Vorderrad positioniert sein. Dies ermöglicht einerseits die Positionierung der Entfernungsbestimmungssensoren mit der angegebenen Distanz zum Boden und führt außerdem dazu, dass ggf. ein vom Vorderrad erzeugtes (regelmäßiges bzw. konkret gestaltetes) Bodenprofil erfasst wird. Hierzu kann zumindest der (in Fahrtrichtung gesehen) erste Entfernungsbestimmungssensor direkt und/oder fluchtend hinter einem Vorderrad angeordnet sein.

Die Entfernungsbestimmungssensoren sind bevorzugt (im Wesentlichen) senkrecht auf den Boden ausgerichtet. Die Anbringung der Entfernungsbestimmungssensoren zwischen den Vorder- und Hinterrädern des Fahrzeugs bzw. Traktors bietet einen geschützten Raum. Wenn die Entfernungsbestimmungssensoren in unmittelbarer Nähe hinter einem Vorderrad angeordnet sind, entsteht durch den Reifendruck des Vorderrads während der Fahrt eine charakteristisch und gut mit den Entfernungsbestimmungssensoren detektierbare Profilerhebung. Durch einen zusätzlichen mechanischen Schutz gegen Verschmutzung der Entfernungsbestimmungssensoren wird die Messgenauigkeit weiter verbessert.

Weiter ist bevorzugt, dass die Geschwindigkeitserfassungseinheit zusätzlich einen Beschleunigungssensor (auch Inertialsensor genannt) umfasst, der datenleitend mit der Auswerteeinheit verbunden ist. So wird ermöglicht, dass mittels einer zusätzlichen Integration der mit dem Beschleunigungssensor (kontinuierlich) gemessenen Beschleunigungswerte ein weiteres Maß für die tatsächliche Geschwindigkeit gewonnen wird. Dieses kann dann ebenfalls in der Auswerteeinheit verarbeitet werden. Zweckmäßig ist der Beschleunigungssensor gegen Umgebungseinflüsse geschützt in der Fahrzeugkabine des Fahrzeugs bzw. Traktors befestigt.

Die hydraulische Betätigungseinheit umfasst bevorzugt einen Hubmechanismus für das Schleppgerät, der von der Auswerteeinheit aktivierbar ist. Hierfür sind insbesondere elektrische oder datenleitende Verbindungen vorgesehen. Insbesondere sind die Auswerteeinheit und der Hubmechanismus so eingerichtet, dass die Auswerteeinrichtung mindestens eine Zustandsgröße einstellen und/oder auf ein Stellorgan des Hubmechanismus zugreifen kann.

Weitere Details der Vorrichtung ergeben sich auch aus der nachfolgenden Erläuterung zum Betriebsverfahren. Insofern können die Erläuterungen zum Verfahren hier ergänzend herangezogen werden. Ebenso gilt, dass die vorstehenden Erläuterungen zur Vorrichtung die Beschreibung des Verfahrens ergänzen können.

Gemäß einem weiteren Aspekt wird ein Verfahren zum Betrieb eines Fahrzeugs, insbesondere eines Traktors, mit einer hydraulischen Betätigungseinheit zur Regelung des Betriebs eines Schleppgeräts an dem Fahrzeug vorgeschlagen. Das Verfahren kann insbesondere mit der hier ebenfalls vorgeschlagenen Vorrichtung durchgeführt werden, wobei insbesondere die Auswerteeinheit dazu eingerichtet ist, das Verfahren durchzuführen. Das Verfahren umfasst zumindest die folgenden Schritte:
a) Bestimmen eines Bodenprofils während der Fahrt des Fahrzeugs mittels zwei in Fahrtrichtung des Fahrzeuges hintereinander positionierten und hin zum Boden gerichteten Entfernungsbestimmungssensoren;
b) Ermitteln des zeitlichen Versatzes der jeweils mit einem Entfernungsbestimmungssensor bestimmten Bodenprofile;
c) Ermitteln der Geschwindigkeit des Fahrzeugs aus dem zeitlichen Versatz;
d) Vergleichen der ermittelten Geschwindigkeit mit einer erwarteten Geschwindigkeit zur Bestimmung eines Antriebsschlupfs;
e) Aktivieren eines Hubmechanismus des Schleppgeräts, wenn der Antriebsschlupf größer als ein Referenzwert ist.

Die Verfahrensschritte können in der hier angegebenen Reihenfolge durchgeführt werden. Es ist möglich, dass einzelne Schritte zeitgleich und/oder zueinander überlagernd durchgeführt werden.

Schritt a) umfasst insbesondere zumindest einen, bevorzugt alle, der folgenden Prozesse:
a.1) Ermitteln eines Bodenprofils an einer Stelle A mit einem ersten Entfernungsbestimmungssensor durch Emittieren von optischen oder akustischen Wellen (im Wesentlichen) senkrecht hin zum Boden und Detektieren der vom Boden reflektierten Wellen und zeitlichem Nachhalten der für die Bodenentfernung charakteristischen Messsignale.
a.2) Ermitteln eines Bodenprofils an einer Stelle B (in Fahrtrichtung mit einem vorgegebenen Abstand hinter bzw. fluchtend zu der Stelle A) mit einem zweiten Entfernungsbestimmungssensor durch Emittieren von optischen oder akustischen Wellen (im Wesentlichen) senkrecht hin zum Boden und Detektieren der vom Boden reflektierten Wellen und zeitlichem Nachhalten der für die Bodenentfernung charakteristischen Messsignale.

Schritt b) umfasst insbesondere den Vergleich der mittels der Entfernungsbestimmungssensoren ermittelten Bodenprofile und Identifikation von in beiden Bodenprofilen auftauchenden charakteristischen Merkmalen. Daraus kann ermittelt werden, mit welchem zeitlichen Versatz diese Bodenprofile messtechnisch erfasst wurden.

Aus dem in Schritt b) ermittelten zeitlichen Versatz und der bekannten Position der Entfernungsbestimmungssensoren mit Bezug auf die Fahrrichtung kann dann gemäß Schritt c) die tatsächliche Geschwindigkeit des Fahrzeugs ermittelt und berechnet werden, bevorzugt in der Auswerteeinheit.

Die so ermittelte tatsächliche Geschwindigkeit wird in Schritt d) weiter zur Bestimmung des aktuellen Antriebsschlupfs mit einer erwarteten Geschwindigkeit verglichen. Die erwartete Geschwindigkeit ergibt sich beispielsweise aus einer Berücksichtigung der Raddrehzahl. Sind tatsächliche Geschwindigkeit und erwartete Geschwindigkeit im Wesentlichen gleich, liegt folglich auch im Wesentlichen kein Antriebsschlupf vor. Liegt die tatsächliche Geschwindigkeit deutlich unterhalb der erwarteten Geschwindigkeit, liegt ein signifikanter Antriebsschlupf vor - das Antriebsrad dreht demnach durch.

Auf Basis des Ergebnisses von Schritt d) in Verbindung mit einem (fest oder variabel) vorgebbaren Referenzwert für den gewünschten bzw. maximal zulässigen) Antriebsschlupf kann in Schritt e) der Hubmechanismus aktiviert werden. So kann beispielsweise das Schleppgerät bei Erreichen bzw. Überschreiten des Referenzwertes abgesenkt oder angehoben werden. Damit verändert sich die Last bzw. Zugkraft auf das Fahrzeug, was unmittelbar auf den tatsächlichen Antriebsschlupf Einfluss nimmt. Folglich kann durch den Betrieb des Hubmechanismus des Schleppgeräts der Antriebsschlupf des Fahrzeugs geregelt bzw. eingestellt werden.

Besonders bevorzugt wird die ermittelte tatsächliche Geschwindigkeit über dem Boden zur Bestimmung bzw. Einstellung des Antriebsschlupfs der angetriebenen Fahrzeugräder herangezogen. Mit Hilfe des Signals der tatsächlichen Fahrgeschwindigkeit und der bekannten Drehzahl der angetriebenen Räder (z. B. aus Getriebesteuergerät oder der zusätzlichen Radsensoren) kann der Schlupf der Antriebsräder bestimmt und begrenzt/eingestellt werden.

Bevorzugt ist, dass das in Schritt a) ermittelte Bodenprofil vom Fahrzeug während der Fahrt erzeugt wird. Hierbei handelt es sich bevorzugt um ein charakteristisches bzw. wiederkehrendes Muster im Boden. Ganz besonderes bevorzugt, wird das Bodenprofil von einem Vorderrad des Fahrzeugs kontinuierlich erzeugt. Gegebenenfalls kann das Radprofil charakteristische (bzw. einzelne) Profilmarkierungen aufweisen, die dann speziell mit den Entfernungsbestimmungssensoren, die bevorzugt als Ultraschallsensoren ausgeführt sind, detektiert werden.

An dem Fahrzeug kann auch ein Beschleunigungssensor vorgesehen sein, mit dem unabhängig die (tatsächliche) Geschwindigkeit ermittelt wird. Mit dieser kann dann die in Schritt c) ermittelte Geschwindigkeit geprüft oder verrechnet werden. Dabei kann eine Plausibilitätsüberprüfung und/oder eine Anpassung der tatsächlichen Geschwindigkeit vorgenommen werden, mit der dann in Schritt e) geregelt wird.

So kann in Schritt d) die mittels des Beschleunigungssensors ermittelte Geschwindigkeit verwendet werden, wenn ein vorgebbarer Abweichungsparameter erreicht wird. Der Abweichungsparameter stellt insbesondere ein Maß für den Unterschied der unabhängig voneinander bestimmten "tatsächlichen" Geschwindigkeiten dar, wobei bei einem zu großen Unterschied eine Entscheidung dahingehend getroffen wird, der mittels des Beschleunigungssensors ermittelten Geschwindigkeit den Vorrang bzw. eine größere Bedeutung zu verleihen. So kann der Abweichungsparameter beispielsweise so festgesetzt sein, dass in Situationen, in denen eine Messung mit den Entfernungsbestimmungssensoren versagt oder zu ungenau ist (z. B. einer Fahrt über Pfützen oder einer Fahrt über Bodenabschnitte ohne ausgeprägtes Profil), kurzzeitig auf die Geschwindigkeitsmessung mittels des Beschleunigungssensors zurückgegriffen wird. Wird der Abweichungsparameter wieder unterschritten, erfolgt wieder eine vorrangige Berücksichtigung der Geschwindigkeitsmessung mittels der Entfernungsbestimmungssensoren.

Die erwartete Geschwindigkeit wird bevorzugt seitens eines Fahrzeugbetriebssystems ermittelt und bereitgestellt. Hierbei kann auf die bekannten bzw. von dem Fahrzeugbetriebssystem einfach bereitstellbaren Daten zurückgegriffen werden. Dazu ist insbesondere die Auswerteeinheit entsprechend ausgerüstet.

Die hier aufgezeigte Anordnung und/oder Methode zur Schlupfregelung bietet insbesondere folgende Vorteile:
- Zeit- und Kraftstoffaufwand werden verringert,
- der Reifenverschleiß wird verringert,
- der Boden wird geschont,
- der Fahrer wird entlastet,
- Festfahren wird vermieden.
Diese Funktion wird durch Messung der tatsächlichen Geschwindigkeit mittels der Entfernungsbestimmungssensoren in verlässlicher, genauer und technisch einfacher Weise realisiert.

Die Erfindung und das technische Umfeld werden nachfolgend anhand von Figuren näher erläutert. Dabei sind regelmäßig gleiche Bauteile mit gleichen Bezugszeichen gekennzeichnet. Die Darstellungen sind schematisch und nicht zur Veranschaulichung von Größenverhältnissen vorgesehen. Die mit Bezug auf einzelne Details einer Figur angeführten Erläuterungen sind extrahierbar und mit Sachverhalten aus anderen Figuren oder vorstehenden Beschreibung frei kombinierbar, es sei denn, dass sich für einen Fachmann zwingend etwas anderes ergibt bzw. eine solche Kombination hier explizit untersagt wird. Es zeigen:
- Fig. 1:: schematisch eine Seitenansicht eines Traktors mit einer hydraulischen Betätigungseinheit zur Regelung des Betriebs eines Schleppgeräts und einer Geschwindigkeitserfassungseinheit;
- Fig. 2:: ein Detail einer Geschwindigkeitserfassungseinheit;
- Fig. 3:: ein Blockschaltbild einer elektronischen Einrichtung zur Darstellung eines beispielhaften Auswertealgorithmus für die Ermittlung der Geschwindigkeit; und
- Fig. 4: ein weiteres Blockschaltbild einer elektronischen Einrichtung zur Darstellung eines weiteren Auswertealgorithmus für die Ermittlung der Geschwindigkeit.

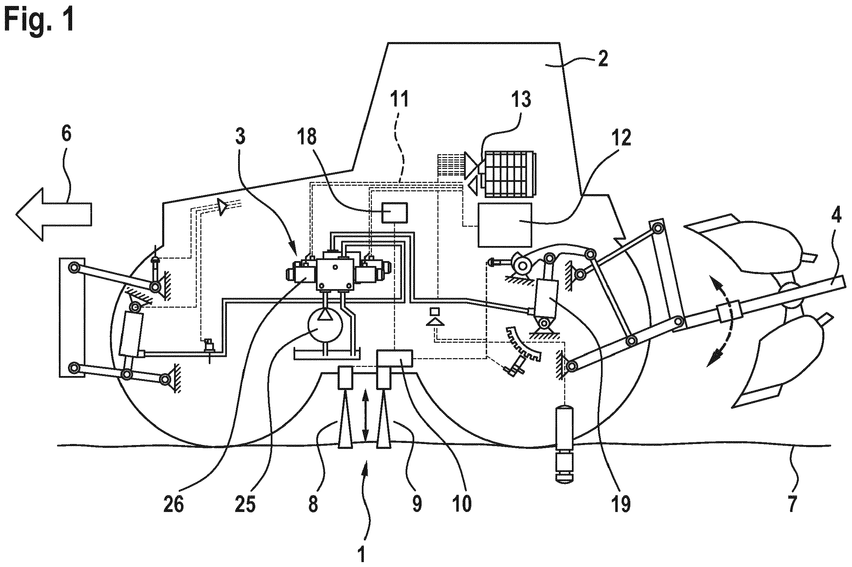

Fig. 1 zeigt die prinzipielle Darstellung einer Vorrichtung 1 an einem Fahrzeug 2, insbesondere nach Art eines Traktors, bei der Bodenbearbeitung mit einem Schleppgerät 4, insbesondere mit einem Pflug. Die Lage bzw. Position des Schleppgeräts 4 kann mit einer hydraulischen Betätigungseinheit 3, aufweisend ein Hydraulikbetriebssystem 13 und einen Hubmechanismus 19, eingestellt werden. Die hydraulische Betätigungseinheit 3 kann insbesondere wie folgt aufgebaut sein: Die Pumpe 25 fördert einen Ölstrom zum Regelventil 26, welches den Hubmechanismus 19 steuert. Dieser wirkt auf die Unterlenker, wodurch das Schleppgerät 4 gehoben, gehalten oder abgesenkt werden kann.

Weiter ist eine Geschwindigkeitserfassungseinheit 5 mit zwei in Fahrtrichtung 6 des Fahrzeuges 2 hintereinander positionierten und hin zum Boden 7 gerichteten ersten Entfernungsbestimmungssensor 8 (insbesondere ein Ultraschallsensor) und zweiten Entfernungsbestimmungssensor 9 (insbesondere einen Ultraschallsensor) vorgesehen. Weiterhin umfasst diese Geschwindigkeitserfassungseinheit 5 eine Auswerteeinheit 10, mit der insbesondere die Entfernungsbestimmungssensoren kontrolliert betrieben und deren Messergebnisse ausgewertet werden können. Weiter sind eine Vielzahl datenleitende Verbindungen 11 hin zu einem Fahrzeugbetriebssystem 12 und einem der hydraulischen Betätigungseinheit 3 zugeordnetem Hydraulikbetriebssystem 13 vorgesehen. Dabei kann die Auswerteeinheit 10 auch Teil des Hydraulikbetriebssystems 13 sein. Die Auswerteeinheit 10 kann zudem den Hubmechanismus 19 des Schleppgeräts 4 bedienen bzw. aktivieren.

Weiter umfasst die Geschwindigkeitserfassungseinheit 5 zusätzlich einen Beschleunigungssensor 18, der datenleitend mit der Auswerteeinheit 10 verbunden ist. Der Beschleunigungssensor 18 ist hier innerhalb des Fahrzeugs 2 positioniert.

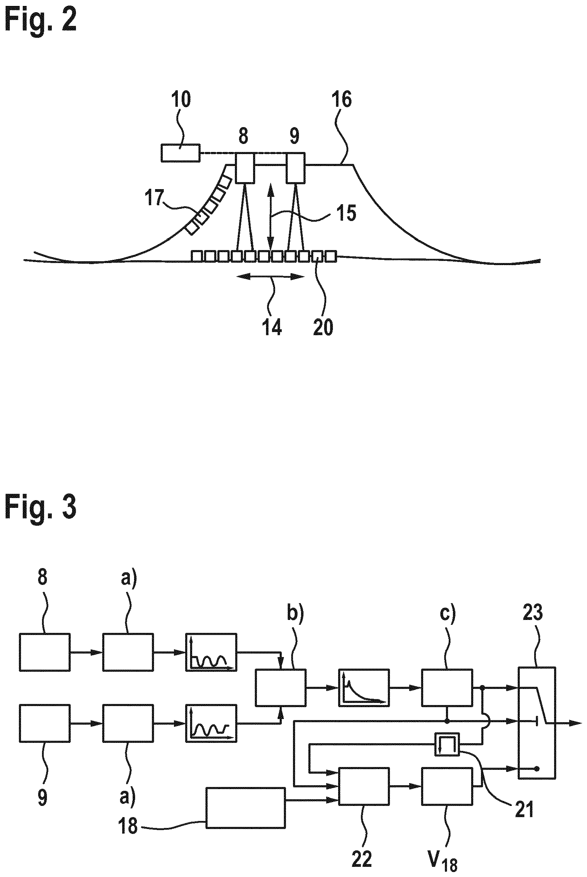

Fig. 2 veranschaulicht beispielhaft den Aufbau der Messanordnung zur Bestimmung der tatsächlichen Geschwindigkeit des Fahrzeugs. Dabei ist der erste Entfernungsbestimmungssensor 8 in unmittelbarer Nähe hinter einem Vorderrad 17 des Fahrzeugs angeordnet und bestimmt einen Abstand zum Boden 7 über die Zeit, so dass sich ein Bodenprofil 20 bestimmen lässt. Der in Fahrtrichtung nachfolgende zweite Entfernungsbestimmungssensor 9 ist mit einem Abstand 14 parallel zur Fahrtrichtung ortsfest an einer Unterseite 16 des Fahrzeugs (und damit mit einer vorgegebenen Distanz 15 zum Boden 7) angebracht. Bevorzugt ist, dass das erfasste Bodenprofil 20 von einem Reifenprofil des Vorderrads 17 erzeugt wird. Durch den Reifenabdruck des Vorderrads 17 während der Bewegung entsteht eine charakteristische und gut detektierbare Profilerhebung, welche gut mit den Entfernungsbestimmungssensoren 8, 9 gemessen werden kann.

Mit der Anordnung der beiden Entfernungsbestimmungssensoren 8, 9 kann die Ermittlung einer tatsächlichen Geschwindigkeit über dem Boden erfolgen. Die Entfernungsbestimmungssensoren 8, 9 können zusätzlich gegen, durch die Vorderräder 17 aufgeworfenes, Bodenmaterial durch einen Trichter oder einen "Spritzschutz" (nicht dargestellt) vor Verschmutzung geschützt werden.

Mit dieser Vorrichtung 1 lässt sich insbesondere der Betrieb der hydraulischen Betätigungseinheit 3 in Abhängigkeit von bzw. zur Regelung des Antriebsschlupfs steuern. Hierzu kann zunächst das Bodenprofil 20 während der Fahrt des Fahrzeugs 2 mittels der beiden Entfernungsbestimmungssensoren 8, 9 erfasst werden. Weiter kann dann der zeitliche Versatz der mit den Entfernungsbestimmungssensoren 8, 9 bestimmten Bodenprofile 20 bestimmt werden. Daraus lässt sich die tatsächliche Geschwindigkeit des Fahrzeugs 2 ermitteln. Die so ermittelte Geschwindigkeit kann mit einer erwarteten (bzw. motor- oder radseitig bestimmten) Geschwindigkeit zur Bestimmung eines Antriebsschlupfs verglichen werden. Ergibt sich daraus, dass der Antriebsschlupf in einem unerwünschten Bereich liegt, kann (von der Auswerteeinheit initiiert) dann der Hubmechanismus 19 des Schleppgeräts 4 aktiviert werden, um die wirkende Widerstandskraft anzupassen und damit auch den Antriebsschlupf zu beeinflussen.

Fig. 3 zeigt eine prinzipiell vereinfachte Darstellung eines möglichen Auswertealgorithmus. Die Signale der Entfernungsbestimmungssensoren 8 und 9 werden gemäß den oben erläuterten Schritten a) dahingehend ausgewertet, dass eine Profilhöhe des Bodens über der Zeit vorliegt. Durch eine Kreuzkorrelation der Signale aus den Entfernungsbestimmungssensoren 8 und 9 kann auf den Zeitversatz jeweils generierten Messsignale geschlossen werden, vergleiche Erläuterungen zu Schritt b). Weiter wird das gemäß Schritt c) bestimmte Geschwindigkeitssignal auf Plausibilität geprüft, z. B. ob die Messung aufgrund ungünstiger Bodenverhältnisse (Pfützen, kaum Profilerhebungen im Zeitrahmen der Messung, etc.) versagt hat.

Das gemäß Schritt c) bestimmte Geschwindigkeitssignal wird an ein Auswahlglied 23 und an einen Speicher 21 weitergemeldet. Ein weiteres (gedoppeltes) Geschwindigkeitssignal entscheidet am Auswahlglied 23, ob die aus Schritt c) bestimmte Geschwindigkeit oder ein zeitlich integrierter Wert der tatsächlichen Geschwindigkeit unter Einsatz eines Beschleunigungssensors 18 (v₁₈) als tatsächliche Fahrgeschwindigkeit und damit zur Verwendung in den Schritten d) und e) ausgegeben wird. Diese Entscheidung kann insbesondere davon abhängen, ob ein vorgegebener Abweichungsparameter erreicht wurde oder nicht. Das vom Beschleunigungssensor 18 bestimmte und ggf. gefilterte Beschleunigungssignal wird in einem Integrierer 22 zeitlich integriert. Um eine zu starke Drift des integrierten Beschleunigungssignals zu vermeiden, wird der Integrierer nach einer negativen Plausibilitätsprüfung zurückgesetzt und es wird ihm ein Initialwert übergeben, welcher einem aus einem oder mehreren Abtast- bzw. Berechnungsschritten aus dem Speicher 21 gespeicherten Geschwindigkeitssignal entspricht.

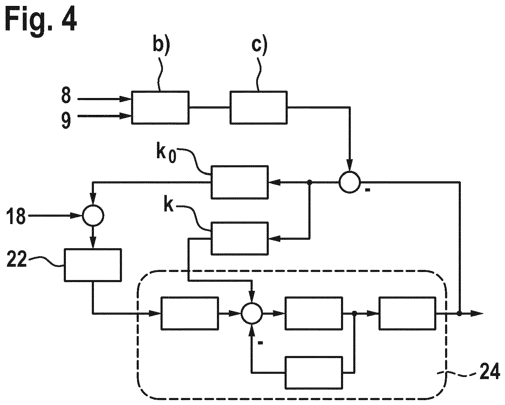

Fig. 4 veranschaulicht ein Detail, wonach es (zusätzlich) möglich ist, die aus den Entfernungsbestimmungssensoren 8, 9 abgeleitete Geschwindigkeit über das aus einem Beschleunigungssensor 18 gewonnene Beschleunigungssignal abzustützen bzw. anzupassen. Hierbei wird ein tiefpassgefilterter Geschwindigkeitswert mit dem korrelierten Geschwindigkeitswert aus der Messung mit den Entfernungsbestimmungssensoren 8, 9 (gemäß Schritte a), b) und c)) verglichen. Die entstandene Regelabweichung wird mit k verstärkt und mit dem Beschleunigungswert, der von dem Beschleunigungssensor 18 generiert wird, summiert. Diese Summe wird wieder in einem Integrierer 22 integriert. Der integrierte Wert kann mit einem Zustandsmodell tiefpassgefiltert werden (Tiefpassfilter 24). Der tiefpassgefilterte Geschwindigkeitswert wird als "tatsächliche" Geschwindigkeit des Fahrzeugs über Grund für die Schlupfregelung und damit die nachfolgenden Schritte d) und e) verwendet.

### Bezugszeichenliste

- 1: Vorrichtung
- 2: Fahrzeug
- 3: hydraulische Betätigungseinheit
- 4: Schleppgerät
- 5: Geschwindigkeitserfassungseinheit
- 6: Fahrtrichtung
- 7: Boden
- 8: erster Entfernungsbestimmungssensor
- 9: zweiter Entfernungsbestimmungssensor
- 10: Auswerteeinheit
- 11: datenleitende Verbindung
- 12: Fahrzeugbetriebssystem
- 13: Hydraulikbetriebssystem
- 14: Abstand
- 15: Distanz
- 16: Unterseite
- 17: Vorderrad
- 18: Beschleunigungssensor
- 19: Hubmechanismus
- 20: Bodenprofil
- 21: Speicher
- 22: Integrierer
- 23: Auswahlglied
- 24: Tiefpassfilter
- 25: Pumpe
- 26: Regelventil

## Patentansprüche

1. Vorrichtung (1) für ein Fahrzeug (2) mit einer hydraulischen Betätigungseinheit (3) zur Regelung des Betriebs eines Schleppgeräts (4) an dem Fahrzeug (2), umfassend zumindest eine Geschwindigkeitserfassungseinheit (5) und eine Auswerteeinheit (10) sowie datenleitende Verbindungen (11) hin zu einem der hydraulischen Betätigungseinheit (3) zugeordnetem Hydraulikbetriebssystem (13), **dadurch gekennzeichnet, dass** die Geschwindigkeitserfassungseinheit (5) zwei in Fahrtrichtung (6) des Fahrzeuges (2) hintereinander positionierte und hin zum Boden (7) gerichtete Entfernungsbestimmungssensoren (8, 9) zur Bestimmung der Entfernung von den Entfernungsbestimmungssensoren (8, 9) hin zum Boden (7) umfasst und von der Auswerteeinheit (10) datenleitende Verbindungen (11) hin zu einem Fahrzeugbetriebssystem (12) vorgesehen sind.

2. Vorrichtung (1) nach Patentanspruch 1, wobei die Entfernungsbestimmungssensoren (8, 9) mit einem Abstand (14) im Bereich von 10 cm bis 30 cm zueinander versetzt angeordnet sind.

3. Vorrichtung (1) nach einem der vorhergehenden Patentansprüche, wobei die Entfernungsbestimmungssensoren (8, 9) mit einer Distanz (15) im Bereich von 30 cm bis 100 cm hin zum Boden (7) positioniert sind.

4. Vorrichtung (1) nach einem der vorhergehenden Patentansprüche, wobei die Entfernungsbestimmungssensoren (8, 9) an einer Unterseite (16) des Fahrzeugs (2) in Nachbarschaft hinter einem Vorderrad (17) positioniert sind.

5. Vorrichtung (1) nach einem der vorhergehenden Patentansprüche, wobei die Geschwindigkeitserfassungseinheit (5) zusätzlich einen Beschleunigungssensor (18) umfasst, der datenleitend mit der Auswerteeinheit (10) verbunden ist.

6. Vorrichtung (1) nach einem der vorhergehenden Patentansprüche, wobei die hydraulische Betätigungseinheit (3) einen Hubmechanismus (19) für das Schleppgerät (4) umfasst, der von der Auswerteeinheit (10) aktivierbar ist.

7. Verfahren zum Betrieb eines Fahrzeugs (2) mit einer hydraulischen Betätigungseinheit (3) zur Regelung des Betriebs eines Schleppgeräts (4) an dem Fahrzeug (2), umfassend zumindest die folgenden Schritte:
a) Bestimmen eines Bodenprofils (20) während der Fahrt des Fahrzeugs (2) mittels zwei in Fahrtrichtung (6) des Fahrzeuges (2) hintereinander positionierten und hin zum Boden (7) gerichteten Entfernungsbestimmungssensoren (8, 9);
b) Ermitteln des zeitlichen Versatzes der jeweils mit einem Entfernungsbestimmungssensor (8, 9) bestimmten Bodenprofile (20);
c) Ermitteln der Geschwindigkeit des Fahrzeugs (2) aus dem zeitlichen Versatz;
d) Vergleichen der ermittelten Geschwindigkeit mit einer erwarteten Geschwindigkeit zur Bestimmung eines Antriebsschlupfs;
e) Aktivieren eines Hubmechanismus (19) des Schleppgeräts (4), wenn der Antriebsschlupf größer als ein Referenzwert ist.

8. Verfahren nach Patentanspruch 7, bei dem das in Schritt a) ermittelte Bodenprofil (20) vom Fahrzeug (2) während der Fahrt erzeugt wird.

9. Verfahren nach Patentanspruch 7 oder 8, bei dem mit einem an dem Fahrzeug (2) vorgesehenen Beschleunigungssensor (18) unabhängig die Geschwindigkeit ermittelt und mit der in Schritt c) ermittelten Geschwindigkeit geprüft oder verrechnet wird.

10. Verfahren nach Patentanspruch 9, bei dem in Schritt d) die mittels des Beschleunigungssensors (18) ermittelte Geschwindigkeit verwendet wird, wenn ein vorgebbarer Abweichungsparameter erreicht wird.

11. Verfahren nach einem der Patentansprüche 7 bis 10, bei dem die erwartete Geschwindigkeit seitens eines Fahrzeugbetriebssystems (12) ermittelt und bereitgestellt wird.

## Claims

1. Device (1) for a vehicle (2) with a hydraulic actuating unit (3) for regulating the operation of a towing unit (4) on the vehicle (2), comprising at least one speed detecting unit (5) and an analysis unit (10) as well as data communications connections (11) to a hydraulic operating system (13) associated with the hydraulic actuating unit (3), **characterized in that** the speed detecting unit (5) comprises two distance determining sensors (8, 9), which are positioned one after the other in the direction of travel (6) of the vehicle (2) and which are directed towards the ground (7), for determining the distance of the distance determining sensors (8, 9) from the ground (7) and data communications corrections (11) to a vehicle operating system (12) are provided from the analysis unit (10).

2. Device (1) according to Claim 1, wherein the distance determining sensors (8, 9) are offset relative to each other with a separation (14) in the region of 10 cm to 30 cm.

3. Device (1) according to any one of the preceding claims, wherein the distance determining sensors (8, 9) are positioned at a distance (15) in the region of 30 cm to 100 cm from the ground (7).

4. Device (1) according to any one of the preceding claims, wherein the distance determining sensors (8, 9) are positioned on the underside (16) of the vehicle (2) in close proximity to and behind a front wheel (17).

5. Device (1) according to any one of the preceding claims, wherein the speed signal detecting unit (5) also comprises an acceleration sensor (18) that has a data communications connection to the analysis unit (10) .

6. Device (1) according to any one of the preceding claims, wherein the hydraulic actuating unit (3) comprises a lifting mechanism (19) for the towing unit (4) that can be activated by the analysis unit (10).

7. Method for the operation of a vehicle (2) with a hydraulic actuating unit (3) for regulating the operation of a towing unit (4) on the vehicle (2), comprising at least the following steps:
a) Determining a ground profile (20) while the vehicle (2) is traveling by means of two distance determining sensors (8, 9) positioned one after the other in the direction of travel (6) of the vehicle (2) and directed toward the ground (7);
b) Determining the time offset of the respective ground profile (20) determined with a distance determining sensor (8, 9);
c) Determining the speed of the vehicle (2) from the time offset;
d) Comparing the determined speed with an expected speed for the determination of a drive slip;
e) Activation of a lifting mechanism (19) of the towing unit (4) if the drive slip exceeds a reference value.

8. Method according to Claim 7, wherein the ground profile (20) of the vehicle (2) determined in step a) is produced while traveling.

9. Method according to Claim 7 or 8, wherein the speed is determined independently with an acceleration sensor (18) provided on the vehicle (2) and is checked or offset with the speed determined in step c).

10. Method according to Claim 9, wherein in step d) the speed determined by means of the acceleration sensor (18) is used if a predeterminable deviation parameter is reached.

11. Method according to any one of Claims 7 to 10, wherein the expected speed is determined and provided by a vehicle operating system (12).

## Revendications

1. Dispositif (1) pour un véhicule (2) doté d'une unité d'actionnement hydraulique (3) pour le réglage du fonctionnement d'un appareil de remorquage (4) du véhicule (2), comprenant au moins une unité de détection de vitesse (5) et une unité d'évaluation (10) ainsi que des liaisons de transport de données (11) en direction d'un système de fonctionnement hydraulique (13) associé à l'unité d'actionnement hydraulique (3), **caractérisé en ce que** l'unité de détection de vitesse (5) comprend deux capteurs de détermination d'éloignement (8, 9) positionnés l'un derrière l'autre dans la direction de marche (6) du véhicule (2) et orientés vers le sol (7) pour la détermination de l'éloignement des capteurs de détermination d'éloignement (8, 9) par rapport au sol (7) et il est prévu des liaisons de transport de données (11) de l'unité d'évaluation (10) au système de fonctionnement du véhicule (12).

2. Dispositif (1) selon la revendication 1, dans lequel les capteurs de détermination d'éloignement (8, 9) sont disposés de façon décalée l'un par rapport à l'autre d'une distance (14) comprise dans la plage de 10 cm à 30 cm.

3. Dispositif (1) selon l'une quelconque des revendications précédentes, dans lequel les capteurs de détermination d'éloignement (8, 9) sont positionnés à une distance (15) comprise dans la plage de 30 cm à 100 cm par rapport au sol (7).

4. Dispositif (1) selon l'une quelconque des revendications précédentes, dans lequel les capteurs de détermination d'éloignement (8, 9) sont positionnés sur un côté inférieur (16) du véhicule (2) à proximité et derrière une roue avant (17).

5. Dispositif (1) selon l'une quelconque des revendications précédentes, dans lequel l'unité de détection de vitesse (5) comprend en outre un détecteur d'accélération (18), qui est en liaison de transport de données avec l'unité d'évaluation (10).

6. Dispositif (1) selon l'une quelconque des revendications précédentes, dans lequel l'unité d'actionnement hydraulique (3) comprend un mécanisme de levage (19) pour l'appareil de remorquage (4), qui peut être activé par l'unité d'évaluation (10).

7. Procédé de conduite d'un véhicule (2) doté d'une unité d'actionnement hydraulique (3) pour le réglage du fonctionnement d'un appareil de remorquage (4) du véhicule (2), comprenant au moins les étapes suivantes:
a) déterminer un profil de sol (20) pendant la marche du véhicule (2) au moyen de deux capteurs de détermination d'éloignement (8, 9) positionnés l'un derrière l'autre dans la direction de marche (6) du véhicule (2) et orientés vers le sol (7) ;
b) déterminer le décalage temporel des profils de sol (20) déterminés respectivement avec un capteur de détermination d'éloignement (8, 9) ;
c) déterminer la vitesse du véhicule (2) à partir du décalage temporel ;
d) comparer la vitesse déterminée avec une vitesse attendue pour la détermination du glissement d'entraînement ;
e) activer un mécanisme de levage (19) de l'appareil de remorquage (4) lorsque le glissement d'entraînement est supérieur à une valeur de référence.

8. Procédé selon la revendication 7, dans lequel on produit le profil de sol (20) déterminé à l'étape a) à partir du véhicule (2) pendant la marche.

9. Procédé selon la revendication 7 ou 8, dans lequel on détermine la vitesse de façon indépendante au moyen d'un détecteur d'accélération (18) prévu sur le véhicule (2) et on la vérifie ou on la compense avec la vitesse déterminée à l'étape c).

10. Procédé selon la revendication 9, dans lequel on utilise à l'étape d) la vitesse déterminée au moyen du détecteur d'accélération (18), lorsque l'on atteint un paramètre de déviation pouvant être prédéterminé.

11. Procédé selon l'une quelconque des revendications 7 à 10, dans lequel on détermine et on fournit la vitesse attendue du côté d'un système de fonctionnement de véhicule (12).
